# EUROPÄISCHE PATENTSCHRIFT

(11) **EP 0 928 549 B1**
(45) Veröffentlichungstag und Bekanntmachung des Hinweises auf die Patenterteilung: **09.01.2002**
(21) Anmeldenummer: 97938779.2
(22) Anmeldetag: 19.08.1997
(51) Int. Cl.: H04Q 7/22, H04Q 7/38

(54) **VERFAHREN ZUR DRAHTLOSEN ÜBERTRAGUNG VON ORTSINFORMATIONEN UND NUTZINFORMATIONEN UND SENDE-/EMPFANGSEINRICHTUNG**
METHOD FOR WIRELESS TRANSMISSION OF LOCAL OR USEFUL INFORMATION, AND TRANSMITTER/RECEIVER PAIR
METHODE DE TRANSMISSION SANS FIL D'INFORMATIONS LOCALES OU UTILITAIRES, ET INSTALLATION D'EMISSION/RECEPTION

(30) Priorität: 24.09.1996 DE 19639093
(43) Veröffentlichungstag der Anmeldung: 14.07.1999
(73) Patentinhaber: SIEMENS AKTIENGESELLSCHAFT, 80333 München (DE)
(72) Erfinder: NAUTA, Auke, D-31141 Hildesheim (DE)
(86) Internationale Anmeldenummer: DE9701769
(87) Internationale Veröffentlichungsnummer: WO9814019

(56) Entgegenhaltungen:
- WO-A-92/02104

## Beschreibung

### Stand der Technik

Die Erfindung geht von einem Verfahren zur drahtlosen Übertragung von Ortsinformationen und Nutzinformationen und von einer Sende-/Empfangseinrichtung nach der Gattung der unabhängigen Ansprüche 1 bzw. 7 aus.

Aus der EP 0 290 725 B1 ist ein Verfahren zum Bestimmen des ungefähren Aufenthaltsortes einer mobilen Funkstation in einem zellularen Funktelefonnetz mit mobilen Funkstationen und mit einer Feststation je Funkzelle bekannt. Die individuellen Feststationsnummern werden mittels Datentelegrammen den im Funkbereich der Feststationen operierenden mobilen Funkstationen mitgeteilt, wo die Feststationsnummer der betreffenden Feststation ausgewertet wird und als Ortsinformation dient.

### Vorteile der Erfindung

Das erfindungsgemäße Verfahren mit den Merkmalen des unabhängigen Anspruchs 1 hat demgegenüber den Vorteil, daß die Ortsinformationen in Zeitlücken des Nutzinformationssignals von der Sende-/Empfangseinrichtung abgestrahlt werden. Auf diese Weise kann zur Übertragung der Ortsinformationen der Aufwand für die Erzeugung und Übertragung eigener Datentelegramme eingespart werden.

Aufgrund der zeitmultiplexen Übertragung der Ortsinformationen und der Nutzinformationen ergibt sich außerdem der Vorteil, daß die zur Verfügung stehende Sendezeit optimal ausgenutzt wird.

Ein weiterer Vorteil der zeitmultiplexen Abstrahlung von Nutzinformationen und Ortsinformationen besteht darin, daß zur Abstrahlung der Nutzinformationen und der Ortsinformationen nur ein einziges Frequenzband erforderlich ist, so daß Frequenzen eingespart werden und jeweils gleiche Sende- und Empfangseinrichtungen verwendet werden können, so daß zusätzlicher Aufwand und Kosten eingespart werden können.

Durch die in den Ansprüchen 2 bis 6 aufgeführten Maßnahmen sind vorteilhafte Weiterbildungen und Verbesserungen des im unabhängigen Anspruch 1 angegebenen Verfahrens möglich.

Ein Vorteil besteht darin, daß eine Synchronisierung der abgestrahlten Nutzinformationen mit den abzustrahlenden Ortsinformationen erfolgt, so daß in der mobilen Station nur ein einziger Empfänger erforderlich ist. Auf diese Weise werden in der mobilen Station Platz, Gewicht, elektrische Energie und damit Kosten eingespart.

Vorteilhaft ist auch, daß von der Sende-/Empfangseinrichtung und/oder der mobilen Station zu vorgegebenen Zeiten eine Statusmeldung, vorzugsweise mit Informationen über den Ort, die Funktionsfähigkeit, Sendeleistung, Sendefrequenz oder dergleichen an die Feststation gesendet wird. Auf diese Weise ist eine drahtlose Kontrolle der Sende-/Empfangseinrichtung und/oder der mobilen Station durch die Feststation möglich.

Die erfindungsgemäße sende-/Empfangseinrichtung mit den Merkmalen des unabhängigen Anspruchs 7 hat den Vorteil, daß sie zur zeitsynchronen und zeitmultiplexen Abstrahlung von Ortsinformationen in Zeitlücken von empfangenen Funksignalen in der Lage ist. Auf diese Weise wird die Sendezeit optimal ausgenutzt. Die Erzeugung und Aussendung eigener Datentelegramme für die Ortsinformationen ist nicht erforderlich, so daß Aufwand und Zeit eingespart werden.

Durch die in den Ansprüchen 8 bis 10 aufgeführten Maßnahmen sind vorteilhafte Weiterbildungen und Verbesserungen der im unabhängigen Anspruch 7 angegebenen Sende/Empfangseinrichtung möglich.

Besonders vorteilhaft ist die Verwendung eines weiteren Senders zur Abstrahlung von Statusmeldungen. Auf diese Weise ist die drahtlose Kontrolle der Sende-/Empfangseinrichtung durch beispielsweise eine Zentrale, die die Statusmeldungen empfängt, möglich.

### Zeichnung

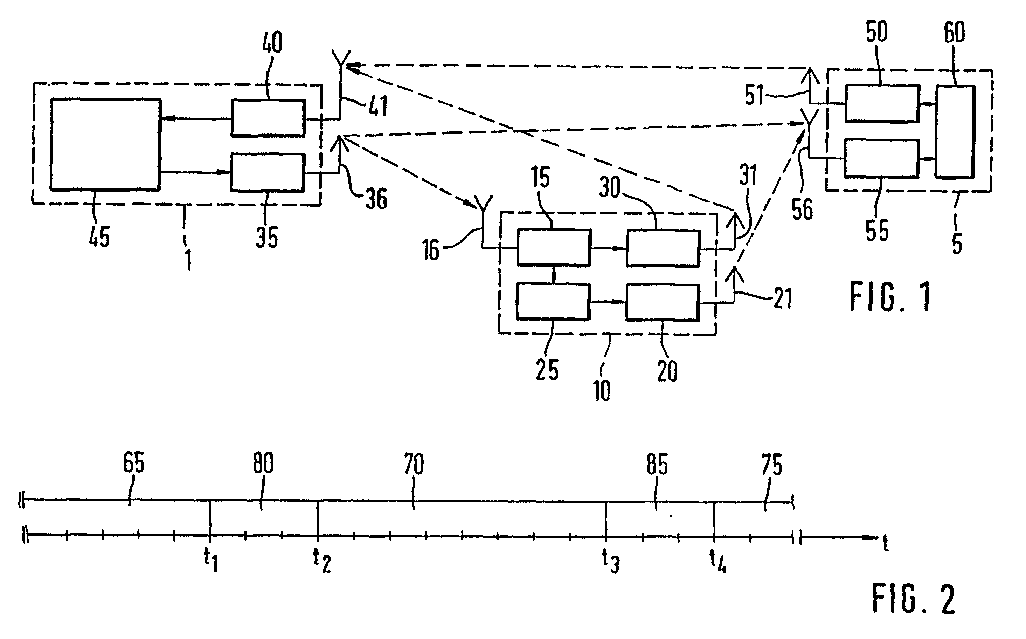

Ein Ausführungsbeispiel der Erfindung ist in der Zeichnung dargestellt und in der nachfolgenden Beschreibung näher erläutert. Es zeigt Figur 1 ein Blockschaltbild zur drahtlosen Übertragung von Ortsinformationen und Nutzinformationen mit einer Feststation, einer Sende/Empfangseinrichtung und einer mobilen Station und Figur 2 ein von der mobilen Station empfangenes Nutzinformationssignal mit zeitmultiplex integrierten Ortsinformationen.

### Beschreibung des Ausführungsbeispiels

In Figur 1 kennzeichnet 1 eine Feststation, die einen Sender 35 und einen Empfänger 40 aufweist. Eine Signalanpassungseinheit 45 in der Feststation 1 ist mit dem Sender 35 und dem Empfänger 40 verbunden. Der Sender 35 ist zur Abstrahlung von Nutzinformationen enthaltenden Funksignalen in einem UHF-Frequenzband und der Empfänger 40 ist zum Empfang von Funksignalen in einem VHF-Frequenzband ausgelegt. Der Sender 35 weist eine Sendeantenne 36 und der Empfänger 40 weist eine Empfangsantenne 41 auf. Weiterhin kennzeichnet 10 eine Sende-/Empfangseinrichtung, die einen Empfänger 15 zum Empfang von in dem UHF-Frequenzband abgestrahlten Funksignalen aufweist. Die Sende/Empfangseinrichtung 10 umfaßt weiterhin einen Sender 20 zur Abstrahlung von Ortsinformationen in dem UHF-Frequenzband. Der Sender 20 und der Empfänger 15 sind über eine Synchronisiervorrichtung 25 miteinander verbunden. Mit dem Empfänger 15 ist außerdem ein weiterer Sender 30 verbunden, der zur Abstrahlung von Statusmeldungen in dem VHF-Frequenzband dient. Der Empfänger 15 weist eine Empfangsantenne 16, der Sender 20 eine Sendeantenne 21 und der weitere Sender 30 eine weitere Sendeantenne 31 auf. Weiterhin kennzeichnet in Figur 1 das Bezugszeichen 5 eine mobile Station, die einen Sender 50 mit einer Sendeantenne 51 und einen Empfänger 55 mit einer Empfangsantenne 56 umfaßt, wobei der Sender 50 und der Empfänger 55 mit einer in der mobilen Station 5 integrierten Signalanpassungseinheit 60 verbunden sind. Der Sender 50 dient dabei zur Abstrahlung von Funksignalen in dem VHF-Frequenzband und der Empfänger 55 dient zum Empfang von Funksignalen in dem UHF-Frequenzband. In Figur 1 sind die Übertragungswege zwischen der Feststation 1, der mobilen Station 5 und der Sende-/Empfangseinrichtung 10 durch gestrichelte Pfeile dargestellt.

In der Signalanpassungseinheit 45 der Feststation 1 wird der vom Sender 35 abzustrahlende Nutzinformationsdatenstrom erzeugt, wobei dieser Nutzinformationsdatenstrom zu vorgegebenen Zeiten unterbrochen wird. Dadurch ergibt sich ein Nutzinformationsdatenstrom mit zeitlichen Lücken, in denen kein Signal vorliegt. Dieser Nutzinformationsdatenstrom wird dem Sender 35 zur Abstrahlung über die Sendeantenne 36 zugeführt. Der Sender 35 strahlt die Nutzinformationen enthaltenden Funksignale in dem UHF-Frequenzband mit vergleichsweise großer Leistung ab, so daß diese Funksignale in einem vergleichsweise großen Gebiet empfangen werden können. In diesem Gebiet befindet sich auch die mobile Station 5 und die Sende/Empfangseinrichtung 10, so daß die Nutzinformationen sowohl vom Empfänger 15 der Sende-/Empfangseinrichtung 10 als auch vom Empfänger 55 der mobilen Station 5 empfangen werden. Die Sende-/Empfangseinrichtung 10 ist ortsfest und dient zur Abstrahlung von Ortsinformationen, die die Position der Sende-/Empfangseirichtung 10 enthalten. Die Abstrahlung der Ortsinformationen erfolgt dabei mit vergleichsweise geringer Leistung, so daß sie nur von in der Nähe der Sende/Empfangseinrichtung 10 befindlichen Stationen empfangen werden können, die auf diese Weise ihren Standort ungefähr lokalisieren können. Dies gilt insbesondere für die mobile Station 5, wenn sie sich in der Nähe der Sende/Empfangseinrichtung 10 bewegt und die von der Sende/Empfangseinrichtung 10 abgestrahlten Ortsinformationen empfangen kann. Die Abstrahlung der Ortsinformationen vom Sender 20 der Sende-/Empfangseinrichtung 10 über die Sendeantenne 21 wird durch die Synchronisiervorrichtung 25 vorbereitet. Dabei führt die Synchronisiervorrichtung 25 eine zeitliche Synchronisierung des vom Empfänger 15 der Sende-/Empfangseinrichtung 10 empfangenen Nutzinformationsdatenstroms mit den abzustrahlenden Ortsinformationen durch. Dazu werden die Ortsinformationen vom Sender 20 der Sende-/Empfangseinrichtung 10 zu Zeiten abgestrahlt, zu denen die Abstrahlung der Nutzinformationen von der Feststation 1 unterbrochen ist. Der Empfänger 55 der mobilen Station 5 empfängt so über seine Empfangsantenne 56 zeitmultiplex die von der Feststation 1 abgestrahlten Nutzinformationen und die von der Sende-/Empfangseinrichtung 10 abgestrahlten Orteinformationen. Sein Empfangssignal hat dabei beispielsweise die in Figur 2 dargestellte Form. Dabei ist über der Zeitachse t die Art der im Empfänger 55 der mobilen Station 5 empfangenen Daten dargestellt. Bis zu einem Zeitpunkt t₁ werden dabei erste Nutzinformationsdaten 65 empfangen. Vom Zeitpunkt t₁ bis zu einem Zeitpunkt t₂ liegt eine Unterbrechung des Nutzinformationsdatenstroms vor, während der erste Ortsinformationsdaten 80 empfangen werden. Vom Zeitpunkt t₂ bis zu einem Zeitpunkt t₃ werden dann zweite Nutzinformationsdaten 70 empfangen. Eine zweite Unterbrechung des Nutzinformationsdatenstromes liegt vom Zeitpunkt t₃ bis zu einem Zeitpunkt t₄ vor, während der zweite Ortsinformationsdaten 85 im Empfänger 55 der mobilen Station 5 empfangen werden. Vom Zeitpunkt t₄ an werden dritte Nutzinformationsdaten 75 empfangen. Die vom Empfänger 55 der mobilen Station 5 empfangenen Signale werden der Signalanpassungseinheit 60 zur weiteren Verarbeitung abgegeben.

Bei der zeitlichen Synchronisierung der von der Feststation 1 abgestrahlten Nutzinformtionen mit den von der Sende-/Empfangseinrichtung 10 abzustrahlenden Ortsinformationen ist ein Empfang der von der Feststation 1 abgestrahlten Nutzinformationen auch in der Sende/Empfangseinrichtung 10 und damit ein in die Sende/Empfangseinrichtung 10 eingebauter Empfänger 15 dann nicht notwendig, wenn die Sende-/Empfangseinrichtung 10 auf andere Weise mit der Feststation 1 synchronisiert ist, so daß sich ein zeitsynchrones System, beispielsweise durch Zuführung eines gemeinsamen Taktes an die Feststation 1 und an die Sende-/Empfangseinrichtung 10 ergibt. Gleichzeitig müssen der Sende-/Empfangseinrichtung 10 auch die Zeitpunkte bekannt gemacht werden, zu denen der Nutzinformationsdatenstrom von der Feststation 1 unterbrochen ist. Dazu müssen der Sende/Empfangseinrichtung 10 beispielsweise geeignete Signalisierungsdaten zugeleitet werden. Dies kann auch dadurch geschehen, daß die entsprechenden Taktsignale der sende-/Empfangseinrichtung 10 nur dann zugeleitet werden, wenn der Nutzinformationsdatenstrom unterbrochen ist und die Ortsinformationen gesendet werden sollen.

Das beschriebene Verfahren kann beispielsweise zur Übertragung von Paging-Signalen verwendet werden. Dabei können von der Signalanpassungseinheit 60 der mobilen Station 5 auch Funksignale zur Abstrahlung in dem VHF-Frequenzband von der Sendeantenne 51 des Senders 50 der mobilen Station 5 erzeugt werden. Diese Signale werden dann vom Empfänger 40 über die Empfangsantenne 41 der Feststation 1 empfangen und zur Verarbeitung an die dortige Signalanpassungseinheit 45 weitergeleitet. Die Rückübertragung von der mobilen Station 5 an die Feststation 1 ermöglicht die Reaktion der mobilen Station 5 auf von der Feststation 1 beispielsweise in Form von Paging-Signalen empfangene Nutzinformationen.

Die Feststation 1 kann vom Bediener der mobilen Station 5 mittels der übertragenen Nutzinformationen Daten abfragen. Es ist jedoch auch möglich, daß die Feststation 1 die mobile Station 5 mittels der übertragenen Nutzinformationen direkt zur Abstrahlung einer Statusmeldung, die Informationen über den Ort, die Funktionsfähigkeit, die Sendeleistung, die Sendefrequenz oder dergleichen der mobilen Station 5 enthält, veranlaßt und auf diese Weise eine drahtlose Kontrolle über die mobile Station 5 ausübt. Dabei erfolgt die Abstrahlung der Statusmeldung von der mobilen Station 5 aufgrund eines beispielsweise im empfangenen Nutzinformationsdatenstrom enthaltenen Aufforderungssignals und/oder generell nach Empfang von Nutzinformationen. Es ist auch möglich, daß eine Abstrahlung von Statusmeldungen an die Feststation 1 automatisch zu vorgegebenen Zeiten durch die mobile Station 5 erfolgt. Die Abstrahlung von Statusmeldungen kann auch manuell durch den Benutzer initiiert werden. Eine Abstrahlung von Ortsinformationen enthaltenden Statusmeldungen von der mobilen Station 5 an die Feststation 1 kann auch immer dann erfolgen, wenn sich die von der mobilen Station 5 empfangenen Ortsinformationen ändern. Dies geschieht dann, wenn die mobile Station 5 Ortsinformationen von einer anderen, in Figur 1 nicht dargestellten Sende-/Empfangseinrichtung empfängt.

Unabhängig vom Empfang von Nutzinformationen bei der mobilen Station 5 kann durch den Bediener der mobilen Station 5 selbständig ein Alarmsignal ausgelöst werden, das von der mobilen Station 5 an die Feststation 1 abgestrahlt wird. Die Auslösung eines Alarmsignals kann auch automatisch erfolgen, beispielsweise dann, wenn die mobile Station 5 für eine vorgegebene Zeitdauer von beispielsweise einer Minute unbewegt bleibt.

Die Voraussetzung für die Anregung der mobilen Station 5 bzw. ihres Bedieners zur Abstrahlung von Funksignalen an die Feststation 1 ist die Adressierung der mobilen Station 5 mittels der von der Feststation 1 an die mobile Station 5 übertragenen Nutzinformationsdaten. Auch die Sende/Empfangseinrichtung 10 ist auf diese Weise adressierbar und somit zur Abstrahlung von Funksignalen an die Feststation 1 anregbar. Dazu weist der weitere Sender 30 der Sende/Empfangseinrichtung 10 eine vergleichbare Abstrahlleistung wie auch der Sender 50 der mobilen Station 5 auf, die ausreicht, um Funksignale von der Sende-/Empfangseinrichtung 10 bzw. der mobilen Station 5 an die Feststation 1 zu übertragen. Die Übertragung erfolgt dabei jeweils im VHF-Frequenzband. Auf diese Weise strahlt auch die Sende/Empfangseinrichtung 10 eine Statusmeldung an die Feststation 1 ab, wenn sie von der Feststation 1 ein entsprechendes Aufforderungssignal mittels der empfangenen Nutzinformationen erhält und/oder generell nach Empfang der von der Feststation 1 abgestrahlten Nutzinformationen. Auch bei der Sende-/Empfangseinrichtung 10 besteht die Möglichkeit einer automatischen Abstrahlung von Statusmeldungen an die Feststation 1 zu vorgegebenen Zeiten. Dabei enthalten auch die von der Sende/Empfangseinrichtung 10 an die Feststation 1 abgestrahlten Statusmeldungen Informationen über den Ort, die Funktionsfähigkeit, die Sendeleistung, die Sendefrequenz oder dergleichen der Sende-/Empfangseinrichtung 10. Somit ist auch eine drahtlose Kontrolle der Sende-/Empfangseinrichtung 10 durch die Feststation 1 möglich.

Die Übertragung von Funksignalen zur mobilen Station 5 und/oder zur Sende-/Empfangseinrichtung 10 kann auch in einem VHF-Frequenzband durchgeführt werden, genauso wie die Übertragung von Funksignalen zur Feststation 1 in einem UHF-Frequenzband erfolgen kann.
Bei Verwendung des gleichen Frequenzbandes in beiden Übertragungsrichtungen werden Frequenzen eingespart. Außerdem sind jeweils gleiche Sende- und Empfangseinrichtungen verwendbar, so daß Aufwand und Kosten eingespart werden können. Bei Verwendung verschiedener Frequenzbänder für die beiden Übertragungsrichtungen wird eine gegenseitige Signalbeeinflussung der beiden Übertragungsrichtungen verhindert.

## Patentansprüche

1. Verfahren zur drahtlosen Übertragung von Ortsinformationen und Nutzinformationen, wobei die Ortsinformationen von einer in der Nähe einer mobilen Station (5) befindlichen vorzugsweise ortsfesten Sende/Empfangseinrichtung (10) an die mobile Station (5) zur Lokalisierung der mobilen Station (5) übertragen werden, **dadurch gekennzeichnet, daß** die Nutzinformationen zwischen einer Feststation (1) und der mobilen Station (5) übertragen werden, daß von der Feststation (1) zu vorgegebenen Zeiten die Abstrahlung von Nutzinformationen unterbrochen wird und daß die Ortsinformationen von der Sende-/Empfangseinrichtung (10) zu Zeiten abgestrahlt werden, zu denen die Abstrahlung von Nutzinformationen von der Feststation (1) unterbrochen ist.

2. Verfahren nach Anspruch 1, **dadurch gekennzeichnet, daß** die von der Feststation (1) abgestrahlten Nutzinformationen auch von der Sende-/Empfangseinrichtung (10) zur zeitlichen Synchronisierung mit den abzustrahlenden Ortsinformationen empfangen werden.

3. Verfahren nach Anspruch 1 oder 2, **dadurch gekennzeichnet, daß** von der Sende-/Empfangseinrichtung (10) und/oder der mobilen Station (5) zu vorgegebenen Zeiten eine Statusmeldung, vorzugsweise mit Informationen über den Ort, die Funktionsfähigkeit, Sendeleistung, Sendefrequenz oder dergleichen, an die Feststation (1) gesendet wird.

4. Verfahren nach Anspruch 3, **dadurch gekennzeichnet, daß** die Statusmeldung nach Empfang der von der Feststation (1) abgestrahlten Nutzinformationen und/oder nach Erhalt eines Aufforderungssignals von der Sende-/Empfangseinrichtung (10) und/oder der mobilen Station (5) an die Feststation (1) gesendet wird.

5. Verfahren nach einem der vorherigen Ansprüche, **dadurch gekennzeichnet, daß** die Übertragung von Funksignalen zur mobilen Station (5) und/oder zur Sende-/Empfangseinrichtung (10) in vorzugsweise einem UHF-Frequenzband durchgeführt wird.

6. Verfahren nach einem der vorherigen Ansprüche, **dadurch gekennzeichnet, daß** die Übertragung von Funksignalen zur Feststation (1) in vorzugsweise einem VHF-Frequenzband durchgeführt wird.

7. Sende-/Empfangseinrichtung (10) zur Abstrahlung von Ortsinformationen, **dadurch gekennzeichnet, daß** ein Empfänger (15) zum Empfang von vorzugsweise in einem UHF-Frequenzband abgestrahlten Funksignalen vorgesehen ist, daß ein Sender (20) zur Abstrahlung von Ortsinformationen vorzugsweise in dem UHF-Frequenzband vorgesehen ist und daß eine Synchronisiervorrichtung (25) vorgesehen ist, die den Sender (20) zur Abstrahlung der Ortsinformationen zu Zeiten veranlaßt, zu denen das empfangene Funksignal unterbrochen ist.

8. Sende-/Empfangseinrichtung (10) nach Anspruch 7, **dadurch gekennzeichnet, daß** ein weiterer Sender (30) zur Abstrahlung von Statusmeldungen vorzugsweise in einem VHF-Frequenzband vorgesehen ist.

9. Sende-/Empfangseinrichtung (10) nach Anspruch 8, **dadurch gekennzeichnet, daß** die Abstrahlung von Statusmeldungen automatisch zu vorgegebenen Zeiten erfolgt.

10. Sende-/Empfangseinrichtung (10) nach Anspruch 8 oder 9, **dadurch gekennzeichnet, daß** der weitere Sender (30) mit dem Empfänger (15) verbunden ist und daß die Abstrahlung von Statusmeldungen bei Erhalt eines Aufforderungssignals durch den Empfänger (15) erfolgt.

## Claims

1. Method for the wireless transmission of location information and user information, the location information being transmitted from a preferably stationary transceiver device (10), located in the vicinity of a mobile station (5), to the mobile station (5) for locating the mobile station (5), **characterized in that** the user information is transmitted between a fixed station (1) and the mobile station (5), **in that** the radiation of user information is interrupted by the fixed station (1) at predetermined times, and **in that** the location information is radiated by the transceiver device (10) at times at which the radiation of user information is interrupted by the fixed station (1).

2. Method according to Claim 1, **characterized in that** the user information radiated by the fixed station
(1) is also received by the transceiver device (10) for time synchronization with the location information to be radiated.

3. Method according to Claim 1 or 2, **characterized in that** a status message, preferably with information about the location, the operability, transmitting power, transmitting frequency or the like, is sent at predetermined times to the fixed station (1) by the transceiver device (10) and/or the mobile station (5).

4. Method according to Claim 3, **characterized in that** the status message is sent to the fixed station (1) by the transceiver device (10) and/or the mobile station (5) after reception of the user information radiated by the fixed station (1) and/or after reception of a request signal.

5. Method according to one of the preceding claims, **characterized in that** the transmission of radio signals to the mobile station (5) and/or to the transceiver device (10) is carried out in preferably a UHF frequency band.

6. Method according to one of the preceding claims, **characterized in that** the transmission of radio signals to the fixed station (1) is carried out in preferably a VHF frequency band.

7. Transceiver device (10) for radiating location information, **characterized in that** a receiver (15) for receiving radio signals preferably radiated in a UHF frequency band is provided, **in that** a transmitter (20) for radiating location information preferably in the UHF frequency band is provided and **in that** a synchronizing device (25) is provided which causes the transmitter (20) to radiate the location information at times at which the received radio signal is interrupted.

8. Transceiver device (10) according to Claim 7,
**characterized in that** a further transmitter (30) for radiating status messages preferably in a VHF frequency band is provided.

9. Transceiver device (10) according to Claim 8,
**characterized in that** status messages are radiated automatically at predetermined times.

10. Transceiver device (10) according to Claim 8 or 9, **characterized in that** the further transmitter (30) is connected to the receiver (15) and **in that** status messages are radiated on reception of a request signal by the receiver (15).

## Revendications

1. Procédé destiné à la transmission sans fil d'informations relatives à la localisation et d'informations utiles, les informations relatives à la localisation étant transmises, à un poste mobile (5), par un dispositif émetteur-récepteur (10), préférentiellement stationnaire, qui se trouve à proximité du poste mobile (5), pour localiser le poste mobile (5), **caractérisé par le fait que** les informations utiles sont transmises entre une station fixe (1) et le poste mobile (5), **par le fait que** l'émission d'informations utiles est interrompue par la station fixe (1) à des instants prédéterminés et **par le fait que** les informations relatives à la localisation sont émises, par le dispositif émetteur-récepteur (10), à des moments pendant lesquels l'émission d'informations utiles est interrompue par la station fixe (1).

2. Procédé selon la revendication 1 **caractérisé par le fait que** les informations utiles émises par la station fixe (1) sont également reçues par le dispositif émetteur-récepteur (10) pour la synchronisation dans le temps avec les informations relatives à la localisation qui doivent être émises.

3. Procédé selon la revendication 1 ou 2 **caractérisé par le fait qu'**un message de statut est émis, à des instants prédéterminés, par le dispositif émetteur-récepteur (10) et/ou par le poste mobile (5) à la station fixe (1), d'une façon préférentielle avec des informations relatives à la localisation, l'état de fonctionnement, la puissance d'émission, la fréquence d'émission ou des informations semblables.

4. Procédé selon la revendication 3 **caractérisé par le fait que** le message de statut est envoyé après réception des informations utiles émises par la station fixe (1) et/ou après réception d'un signal de sollicitation du dispositif émetteur-récepteur (10) et/ou du poste mobile (5) à la station fixe (1).

5. Procédé selon l'une des revendications précédentes **caractérisé par le fait que** la transmission de signaux radio vers le poste mobile (5) et/ou vers le dispositif émetteur-récepteur (10) a lieu, d'une façon préférentielle, dans une bande de fréquence UHF.

6. Procédé selon l'une des revendications précédentes **caractérisé par le fait que** la transmission des signaux radio vers la station fixe (1) a lieu, d'une façon préférentielle, dans une bande de fréquence VHF.

7. Dispositif émetteur-récepteur (10), destiné à l'émission d'informations relatives à la localisation, **caractérisé par le fait qu'**il est prévu un récepteur (15), destiné à la réception de signaux radio émis, d'une façon préférentielle, dans une bande de fréquences UHF, qu'il est prévu un émetteur (20), destiné à l'émission d'informations relatives à la localisation, d'une façon préférentielle, dans une bande de fréquences UHF, et qu'il est prévu un dispositif de synchronisation (25), qui incite l'émetteur (20) à émettre les informations relatives à la localisation à des moments pendant lesquels le signal radio reçu est interrompu.

8. Dispositif émetteur-récepteur (10) selon la revendication 7 **caractérisé par le fait qu'**il est prévu un autre émetteur (30) destiné à émettre des messages de statuts, d'une façon préférentielle, dans une bande de fréquence VHF.

9. Dispositif émetteur-récepteur (10) selon la revendication 8 **caractérisé par le fait que** l'émission de messages de statuts a lieu automatiquement à des instants prédéterminés.

10. Dispositif émetteur-récepteur (10) selon la revendication 8 ou 9 **caractérisé par le fait que** l'autre émetteur (30) est relié au récepteur (15) et que l'émission de messages de statuts a lieu sur réception d'un signal de sollicitation par le récepteur (15).
